# FASCICULE DE BREVET EUROPEEN

(11) **EP 1 042 518 B1**
(45) Date de publication et mention de la délivrance du brevet: **27.02.2002**
(21) Numéro de dépôt: 98962137.0
(22) Date de dépôt: 16.12.1998
(51) Int. Cl.: C22B 7/00, C22B 7/02, C22B 19/20, C22B 13/00, C22B 3/10, C22B 3/24

(54) **LIXIVIATION OXYDANTE DE BOUES CONTAMINEES CONTENANT DU FER AVEC SEPARATION DU ZINC ET DU PLOMB**
OXIDIERENDE AUSLAUGUNG EISENHALTIGER HÜTTENSCHLÄMME MIT ENTFERNUNG VON ZINK UND BLEI
OXIDISING ELUTRIATION OF CONTAMINATED SLUDGE CONTAINING IRON WITH SEPARATION OF ZINC AND LEAD

(30) Priorité: 16.12.1997 BE 9701027
(43) Date de publication de la demande: 11.10.2000
(73) Titulaire: SIDMAR N.V., B-9042 Gent (BE)
(72) Inventeur: MORTIER, Ronald, B-9960 Assenede (BE)
(74) Mandataire: Van Malderen, Joelle
(86) Numéro de dépôt international: BE9800201
(87) Numéro de publication internationale: WO9931285

(56) Documents cités:
- EP-A- 0 021 809
- AT-B- 400 928
- GB-A- 2 128 597
- LU-A- 87 535
- US-A- 3 973 949
- US-A- 4 572 771
- US-A- 5 336 297
- DATABASE WPI Section Ch, Derwent Publications Ltd., London, GB; Class D15, AN 73-72860U XP002074793 & JP 48 055815 A (MOMOZAKI J)
- DATABASE WPI Section Ch, Week 121993 Derwent Publications Ltd., London, GB; Class J01, AN 93-098837 XP002074794 & SU 1 725 949 A (BALKHASHMED PROD. ASSOC.), 15 avril 1992
- DOUG ZUNKEL: "What to do with your EAF dust" STEEL TIMES INTERNATIONAL,juillet 1996, pages 46-50, XP000621780

## Description

### Objet de l'invention

La présente invention concerne un procédé pour le traitement de boues contaminées contenant du fer telles que les résidus sidérurgiques, plus particulièrement pour séparer les métaux non ferreux des boues afin de permettre la réutilisation en sidérurgie, au titre de matières premières, des boues traitées.

### Arrière-plan technologique à la base de l'invention

La production d'acier par la voie classique (fusion réductive de minerais de fer dans des hauts-fourneaux ou la fusion de ferrailles et d'éponges de fer dans des fours électriques) entraîne la formation d'un résidu contaminé par du zinc et contenant du fer. La teneur en zinc d'une telle matière est variable et dépend du procédé utilisé et des matières de départ. De manière générale, une répartition des matières à teneur élevée en zinc et des matières à faible teneur en zinc est possible. Les matières à faible teneur en zinc peuvent être immédiatement recyclées dans la production. Cette technique est qualifiée de "recyclage interne". Elle provoque la formation d'une poussière enrichie en zinc, qui doit être traitée par d'autres techniques.

Un autre procédé est la vitrification ou l'inertisation. Par ce procédé, la matière qui n'est pas économiquement recyclable est traitée de manière que les résidus toxiques qui sont présents dans la poussière sont incorporés dans d'autres produits afin d'obtenir des produits finaux qui soient inertes en présence d'eau et d'air. Ces produits peuvent ensuite servir de produits de base dans la construction des routes ou comme verre ou matériau céramique. Des exemples de tels procédés sont constitués par la vitrification de mélanges de la poussière avec silicates avec un chauffage entre 800 et 1400 °C, ce qui entraîne la formation de produits vitreux. Un autre procédé du même type consiste en le mélange de la poussière avec des alumino-silicates, de la chaux et d'autres additifs, provoquant une réaction des métaux lourds dans la poussière avec les additifs de façon à former former une matrice de silicate de calcium-aluminium, qui présente une structure similaire à celle du béton et qui peut être utilisée comme stabilisant du sol. Le zinc n'est pas recyclé mais est fixé dans la matrice.

Un autre type de procédé peut être qualifié de manière générale de processus pyro-métallurgique. Ces processus ont pour but de produire du ZnO ou du Zn métallique purs. L'exemple le plus connu est le procédé Rotary Kiln WAELZ. Les matériaux à traiter sont introduits simultanément avec des agents réducteurs et des additifs dans un four. Dans la zone de réduction du four, le ZnO est réduit et évaporé. Dans la zone oxydante du four, le zinc se ré-oxyde pour former un oxyde de zinc qui est récupéré comme matière première dans une installation d'épuration de gaz. La difficulté de ce procédé est que le ZnO produit contient trop de chlore et de fluor et dans certains cas, trop de Cd et Pb. Ceci entraîne la nécessité d'un traitement complémentaire avant de procéder à la fusion dans une installation Imperial Smelting Furnace par exemple.

Un dernier type de procédé de traitement peut être décrit comme des processus hydrométallurgiques. Ces processus sont caractérisés par la présence d'une opération de lixiviation. Les agents de lixiviation déjà décrits sont NaOH (procédé S.E.R.H.-CEBEDEAU), NH₃ (procédés UBC-Chapparral et EZINEX) et H₂SO₄ (Modified Zincex Process) ainsi que certains acides organiques. Les plus utilisés sont NaOH et H₂SO₄, mais ces agents présentent quelques problèmes spécifiques : lors de l'utilisation de NaOH, il faut utiliser une solution à forte concentration pour obtenir une solubilité suffisante de Zn, tandis que lors de l'utilisation de H₂SO₄, les silicates et les ferrites sont difficilement lixiviables et, dans le cas de certains minerais, une formation d'un gel de silice se produit, ce qui entraîne des difficultés de séparation.

### Etat de la technique

Dans le document LU-87 535, on décrit un procédé de traitement de matières contenant des métaux lourds, en particulier des résidus sidérurgiques, par lixiviation acide.

La caractéristique de l'invention est d'utiliser comme réactif des acides riches en ions Fe⁺⁺⁺ et pauvres en ions Fe⁺⁺.

Elle peut donc comporter une étape préliminaire consistant à soumettre à une opération d'oxydation une solution acide riche en ions Fe⁺⁺ afin d'oxyder ceux-ci et de produire une solution riche en ions Fe⁺⁺⁺. Il est prévu dans ce cas, dans l'optique de la récupération des résidus sidérurgiques, d'utiliser un bain usé de décapage à l'acide, ces bains étant riches en ions Fe⁺⁺.

Cette technique implique la présence d'une telle solution acide riche en Fe⁺⁺⁺ avec les matières à traiter contenant des métaux lourds afin de provoquer la précipitation d'au moins une partie du Fe⁺⁺⁺ de ladite solution acide et d'autre part la dissolution des métaux lourds en vue de produire une deuxième solution.

On mesure à intervalles réguliers le pH de cette seconde solution afin de maintenir un pH qui est sensiblement égal à 2. On règle ensuite le pH à une valeur comprise entre 3 et 5 par addition d'une substance alcaline, on oxyde le Fe⁺⁺ résiduel en Fe⁺⁺⁺ à l'aide d'un agent oxydant et on provoque une nouvelle précipitation sélective du fer résiduel en solution. Ensuite, on sépare la phase solide et la phase liquide, et on ajoute à la phase liquide un réactif provoquant la formation et la précipitation d'un composé insoluble desdits métaux lourds, soit simultanément, soit successivement. Après chaque opération de précipitation d'un composé insoluble, on sépare la phase liquide résiduelle et la phase solide contenant ledit composé insoluble.

Le choix du pH de l'ordre de 2 qui est cité, est destiné à réduire autant que possible la redissolution du fer. Le réglage du potentiel redox par addition de Fe⁺⁺⁺ est destiné à garder le plomb en solution. Dans la technique décrite, le fer dissous est précipité dans un deuxième réacteur lors de l'augmentation du pH, ce qui entraîne des pertes de réactifs.

Dans le document AT-400 928-B, on propose l'utilisation d'échangeurs d'ions, et plus précisément d'échangeurs de cations, la sélectivité étant atteinte en modifiant le taux d'acidité.

Le document GB-2 128 797-A propose également un échangeur de cations pour récupérer des métaux non ferreux.

Le document Database WPI, Section Ch, Derwent Publications Ltd., London, GB; Class D15, AN 73-7286OU XP002074793 & JP 48 055 815 A (Momozaki J) décrit une technique de traitement de poussières d'origine sidérurgique par de l'HCl résiduaire oxydé par du chlore gazeux ou de l'acide nitrique. On neutralise et sépare par filtration de l'hydroxyde de fer et on traite le filtrat par du zinc métallique pour précipiter et filtrer les métaux lourds. Ensuite, le filtrat est neutralisé pour récupérer de l'hydroxyde de zinc.

Le document Database WPI, Section Ch, Week 12 1993, Derwent Publications Ltd., London, GB; Class J01, AN 93-098837 XP002074794 & SU 1 725 949 A (Balkhashmed Prod. Assoc.), 15 April 1992, décrit la libération de cations métalliques sous l'effet d'une solution de désorption.

### Buts de l'invention

La présente invention a pour but de proposer un procédé hydrométallurgique nouveau pour l'élimination du Zn et du Pb ainsi que d'autres contaminants tels que les métaux alcalins ou alcalinoterreux au départ de boues, qui permette la récupération de fer dans les installations de frittage tandis que les métaux non ferreux peuvent être purifiés et réutilisés.

### Caractéristiques principales de l'invention

La caractéristique essentielle de l'invention est un procédé pour la lixiviation de métaux contaminants tels que le Zn et le Pb pour les séparer hors des boues contenant du fer, caractérisé par les étapes opératoires suivantes :
- une étape non sélective de lixiviation des boues contenant du fer en milieu oxydant acide à un pH inférieur à 2 dans un réacteur afin d'obtenir une suspension lixiviée;
- une première étape de séparation au cours de laquelle la suspension lixiviée est séparée en une fraction solide et en une solution;
- une étape d'oxydation dans laquelle la solution subit une oxydation par un agent oxydant, provoquant la conversion du Fe⁺⁺ dans la solution en Fe⁺⁺⁺;
- réutilisation de la solution oxydée dans l'étape de lixiviation, ce qui provoque une précipitation du Fe⁺⁺⁺ dans le réacteur et son élimination de la solution au cours de la première étape de séparation tandis que l'acide lié sous forme de FeCl₃ est récupéré.

La réutilisation de la solution oxydée dans l'étape de lixiviation est remarquablement avantageuse : la solution se trouve à un pH faible, ce qui réduit la consommation d'acide, tandis que l'acide lié sous forme de FeCl₃ est récupéré dans le réacteur.

De plus, la solution ne doit pas subir de neutralisation. Le Fe⁺⁺ qui est passé en solution dans le réacteur est converti en Fe⁺⁺⁺ dans l'étape d'oxydation, ce qui provoque la précipitation dans le réacteur et la possibilité de réutilisation dans les installations de frittage. De plus, on observe une consommation d'eau inférieure par tonne de boue traitée.

La première étape de séparation peut être réalisée par filtration. L'étape de lixiviation peut comporter l'addition de HCl et/ou de FeCl₃.

Le pH dans l'étape de lixiviation est inférieur à 2, de préférence inférieur à une valeur de l'ordre de 1,5, des valeurs jusqu'à 0,5 étant possibles. Le procédé permet donc de travailler à un taux d'acidité bas, du fait que l'acide utilisé peut être récupéré par la recirculation, en d'autres mots les frais en réactifs chimiques et les frais de neutralisation ne s'accroissent pas significativement. La quantité de fer qui passe en solution n'est pas d'une importance primordiale. Le but de la valeur de pH choisie est que 95% environ du Zn et du Pb présents passe en solution, le résidu étant récupéré dans les installations de frittage.

Le potentiel redox dans l'étape de lixiviation est de préférence supérieur à environ 450 mV.

Selon une forme d'exécution particulière de l'invention, le procédé comporte une deuxième étape de séparation, qui inclut une séparation de la solution résultant de la première étape de séparation sur au moins un échangeur d'ions, la concentration en ions Cl⁻ dans la solution étant au moins de l'ordre de 1 M.

L'agent oxydant utilisé peut être largement quelconque, le Cl₂ étant cependant préféré pour une application industrielle.

Le temps de traitement moyen pour l'étape de lixiviation est de préférence d'environ 2 heures.

La concentration en Cl⁻ dans la solution est de préférence comprise entre 1,5 et 2,5 mol/l. Ceci exerce un effet avantageux sur la capacité de l'échangeur d'ions. En effet, plus la concentration en Cl⁻ est élevée, meilleur sera l'échange des ions Zn et Pb. Cependant, l'échange des ions Fe, qui n'est que de 1% pour une concentration en chlorure de 2 mol/l, s'accroît quelque peu lorsque la concentration en Cl⁻ dépasse 2 mol/l. Ceci est à éviter du fait que la séparation devient plus mauvaise.

L'échangeur d'ions peut être régénéré avec de l'eau et/ou une solution aqueuse d'ions métalliques, auquel cas le régénérat qui s'écoule est recueilli. Ceci signifie que l'échangeur d'ions peut être régénéré avec le régénérat obtenu jusqu'à ce que la concentration en métal dans celui-ci ne devienne trop élevée. De ce fait, il n'est pas nécessaire d'utiliser des acides ou des bases pour la régénération, et il n'est pas nécessaire de toujours utiliser de l'eau pure, ce qui réduit la consommation d'eau de l'installation.

A partir du régénérat, on peut ensuite, après avoir éliminé de la solution le Pb présent par cémentation en ajoutant de la poudre de zinc ; le zinc métallique peut être récupéré par électrolyse ou le Zn(OH)₂ ou le ZnCO₃ peuvent être récupérés à l'aide d'une réaction de précipitation.

L'invention sera décrite plus en détails en référence à des modes d'exécution préférés de celle-ci au regard des dessins annexés. Dans les figures, des éléments identiques exerçant la même fonction ont reçu des repères de référence identique.

### Description des figures

- Les figures 1 et 2: sont des représentations schématiques des installations permettant l'exécution de l'invention.
- La figure 3: représente une forme d'exécution possible d'un réacteur pour l'étape de lixiviation. Ce réacteur est utilisé dans une installation pilote.
- La figure 4: représente une forme d'exécution possible d'un filtre pour réaliser la première étape de séparation.
- La figure 5: représente la quantité de Zn et de Pb (g/l) dans l'écoulement de l'échangeur d'ions en fonction du volume traité (m/l).
- La figure 6: présente l'évolution de la quantité de Fe⁺⁺ en % et du potentiel redox en mV en fonction de la quantité de NaOCl alimentée dans l'étape d'oxydation exprimée en 1 NaOCl par 1. de liquide de lixiviation.
- La figure 7: représente l'évolution du potentiel redox (mV) en fonction de la quantité ajoutée de Ca(ClO)₂ dans l'étape d'oxydation.
- La figure 8: décrit l'évolution du pH en fonction de la quantité ajoutée de Ca(ClO)₂ dans l'étape d'oxydation.

### Description détaillée de l'invention

L'invention concerne l'élimination de métaux contaminants tels que Zn et Pb au départ de boues contenant du fer en recourant à une lixiviation non sélective, une séparation pour obtenir une matière solide et une solution, et la réutilisation de la solution oxydée. L'invention sera décrite en se référant aux exemples.

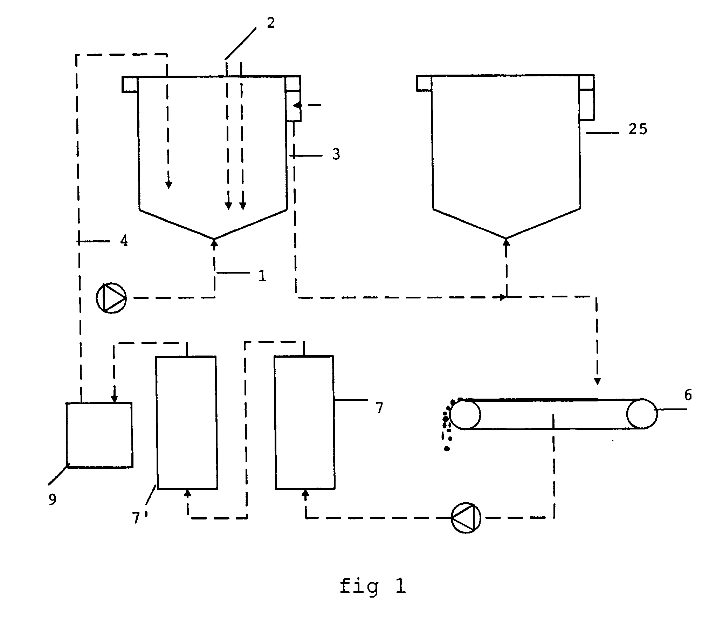

Un schéma général de l'installation par laquelle la présente invention peut être mise en oeuvre est représenté à la figure 1. La boue est amenée en 1 dans un réacteur 10 simultanément avec les réactifs chimiques 2 (par exemple HCl) et un produit recirculé 4, qualifié ci-après de "recirculat". Dans le réacteur 10, l'étape de lixiviation se produit dans un milieu oxydant acide. La suspension lixiviée est ensuite soit stockée dans un réservoir tampon 25 (optionnel), soit directement filtrée sur un filtre à bande 6. Pour obtenir une bonne filtration, on peut ajouter un floculant (par exemple Zetag 32) ; ceci se réalise de préférence dans le produit qui déborde du réacteur. La séparation sur le filtre à bande 6 (première étape de séparation) produit une matière solide et une solution. La solution qui contient tous les ions métalliques dissous est amenée à des échangeurs d'ions 7 et 7', ce qui fixe Zn et Pb sous forme de complexes de chlorure dans l'échangeur d'ions tandis que tous les autres ions métalliques passent sans être complexés.

Les ions Zn et Pb peuvent être éliminés en effectuant une régénération de l'échangeur d'ions. La solution passante dont les ions Zn et Pb ont été séparés, subit ensuite une oxydation en 9 en ajoutant un agent oxydant (par exemple du chlore gazeux Cl₂ ou NaOCl). La solution oxydée est réutilisée comme recirculat 4 dans le réacteur 10. Le fer oxydé sous forme Fe⁺⁺⁺ passera en solution dans le réacteur, ce qui permet aisément sa récupération au cours de l'étape de filtration pour le réutiliser dans les installations de frittage. La partie essentielle de l'invention est constituée par l'étape de lixiviation. Celle-ci est réalisée par addition de HCl et/ou de FeCl₃ dans la boue. La lixiviation, c'est-à-dire le passage en solution des ions métalliques, s'effectue à un pH qui est inférieur à 2, de préférence de l'ordre de 1,5. Du fait que de manière générale, la contamination est due à Zn et Pb et que Zn constitue un problème technologique dans les hauts-fourneaux, le poids de l'invention porte sur l'élimination de Zn hors des boues.

### Composition de la boue utilisée dans les exemples

Le tableau 1 représente une composition moyenne en matière sèche provenant de deux hauts-fourneaux (A et B) et un lagunage de boue.

**Tableau 1 :**

| Composition moyenne (%) de la matière sèche d'une boue de haut-fourneau dans des hauts-fourneaux A et B et de la boue d'un lagunage de boue. | | | |
|---|---|---|---|
| | Haut-fourneau A | Haut-fourneau B | Lagunage de boue |
| Teneur en matière sèche | | | 13±2 |
| C | 25±5 | 21±5 | |
| S | 2,1±0,6 | 2,1±0,7 | |
| Pb | | | 1,02±0,02 |
| Zn | 5±2 | 5±2 | 4,43±0,08 |
| Fe | 14±4 | 14±5 | 13,5±0,3 |
| Mn | 0,11±0,05 | 0,11±0,04 | 0,15±0,02 |
| Ca | 13±4 | 13±5 | 4,6±0,1 |
| Al | 2±1 | 1,7±0,9 | 1,19±0,03 |
| P | 0,2±0,1 | 0,2±0,2 | |
| Mg | 1±1 | 2±1 | 1,41±0,05 |
| SiO₂ | 6±3 | 6±3 | |
| Na | 0,13±0,08 | 0,2±0,1 | |
| K | 0,2±0,2 | 0,2±0,2 | |

### Exemple 1 : lixiviation de Zn, Pb et Fe au départ de la boue provenant d'un lagunage avec HCl ou FeCl₃ : influnce du pH

La boue provenant d'un lagunage est lixiviée avec HCl dans une installation d'essai selon la figure 1.

Les rendements de lixiviation pour divers métaux sont repris dans le tableau 2.

Les concentrations métalliques dans le liquide de lixiviation sont reprises dans le tableau 3.

**Tableau 2 :**

| Rendements (%) en fonction du pH final lors de la lixiviation par HCl. | | | | | | | |
|---|---|---|---|---|---|---|---|
| pH | Mg | Al | Ca | Fe | Mn | Zn | Pb |
| 3,31 | 64 | 56 | 81 | 10 | 29 | 32 | 0,2 |
| 1,46 | 59 | 67 | 79 | 15 | 42 | 63 | 35 |
| 1,42 | 80 | 86 | 91 | 25 | 51 | 60 | 5 |
| 1,31 | 71,1 | 80,0 | 92,0 | 20,4 | 46,1 | 55,7 | 36,0 |
| 1,08 | 85,0 | 89,3 | 82,2 | 38,4 | 55,1 | 68,8 | 0,7 |
| 1,01 | 78,8 | 77,9 | 89,6 | 44,9 | 46,9 | 58,1 | 47,6 |
| 1,01 | 88,0 | 89,0 | 95,0 | 53,0 | 80,0 | 89,0 | 90,0 |
| 0,90 | 79,1 | 76,4 | 91,2 | 45,0 | 48,7 | 58,1 | 58,0 |
| 0,75 | 97,5 | 93,5 | 99,9 | 67,8 | 96,0 | 89,8 | 96,2 |
| 0,72 | 82,6 | 78,1 | 93,9 | 55,5 | 55,9 | 64,6 | 89,1 |
| 0,68 | 78,6 | 74,0 | 91,9 | 48,7 | 50,3 | 60,7 | 90,2 |
| 0,62 | 78,0 | 81,9 | 93,1 | 27,9 | 57,2 | 69,2 | 93,3 |
| 0,54 | 94,8 | 72,2 | 99,9 | 73,4 | 91,4 | 97,9 | 97,6 |
| 0,45 | 86,3 | 77,5 | 95,5 | 46,9 | 65,6 | 61,3 | 65,8 |
| 0,38 | 99,1 | 98,9 | 99,8 | 92,2 | 98,7 | 95,6 | 97,4 |
| 0,37 | 91,4 | 83,4 | 96,7 | 52,2 | 75,5 | 73,6 | 91,0 |
| 0,34 | 88,8 | 78,9 | 95,0 | 46,7 | 74,6 | 75,1 | 98,5 |
| 0,3 | 86,7 | 70,9 | 91,3 | 42,6 | 70,6 | 71,7 | 98,3 |
| 0,25 | 88,5 | 89,6 | 95,8 | 49,2 | 69,3 | 80,9 | 9,4 |

**Tableau 3 :**

| Concentrations (mg/l) dans le liquide de lixiviation pour différents métaux lors de la lixiviation par HCl dans une installation d'essai. | | | | | | | |
|---|---|---|---|---|---|---|---|
| pH | Mg | Al | Ca | Fe | Mn | Zn | Pb |
| 3,31 | 369 | 600 | 1260 | 746 | 16,2 | 786 | 1 |
| 1,46 | 297 | 566 | 1140 | 1370 | 27,2 | 1034 | 194 |
| 1,42 | 329 | 664 | 1086 | 1032 | 17,6 | 1007 | 17,1 |
| 1,31 | 255 | 517 | 1782 | 1024 | 17 | 897 | 179 |
| 1,08 | 271 | 660 | 844 | 1046 | 13 | 1822 | 5 |
| 1,01 | 247 | 432 | 554 | 1646 | 10 | 1426 | 368 |
| 1,01 | 343 | 576 | 1173 | 2304 | 35 | 1575 | 593 |
| 0,90 | 235 | 387 | 509 | 1545 | 10 | 1310 | 420 |
| 0,75 | 186 | 136 | 6772 | 460 | 22 | 522 | 70 |
| 0,72 | 219 | 349 | 437 | 1670 | 9 | 1291 | 688 |
| 0,68 | 205 | 322 | 402 | 1571 | 9 | 1201 | 643 |
| 0,62 | 381 | 665 | 1610 | 1800 | 25 | 1383 | 603 |
| 0,54 | 406 | 141 | 7081 | 1014 | 21 | 632 | 380 |
| 0,45 | 198 | 353 | 486 | 1659 | 12 | 1073 | 701 |
| 0,38 | 490 | 814 | 14460 | 2078 | 59 | 1392 | 256 |
| 0,37 | 155 | 260 | 371 | 1040 | 9 | 760 | 677 |
| 0,34 | 176 | 298 | 421 | 1410 | 13 | 916 | 681 |
| 0,3 | 190 | 269 | 418 | 1686 | 15 | 1009 | 707 |
| 0,25 | 328 | 816 | 952 | 1606 | 21 | 2564 | 80 |

Pour une lixiviation par FeCl₃, on a utilisé exactement la même procédure que dans l'exemple 1, la seule différence étant que l'on utilise ici FeCl₃ au lieu de HCl. Les rendements de lixiviation pour cet exemple sont repris dans le tableau 4. Le résultat obtenu pour Fe ne doit pas être pris en considération compte tenu du fait qu'il est faussé par la présence de Fe dans le milieu de lixiviation.

**Tableau 4 :**

| Rendements (%) en fonction du pH final lors de la lixiviation par FeCl₃ | | | | | | | |
|---|---|---|---|---|---|---|---|
| pH | Mg | Al | Ca | Fe | Mn | Zn | Pb |
| 6,02 | 60,1 | 0,1 | 60,7 | 11,3 | 41,8 | 15,5 | 0,1 |
| 5,53 | 68,0 | 1,0 | 73,2 | 24,1 | 46,3 | 41,0 | 0,4 |
| 5,43 | 69,3 | 0,8 | 71,3 | 26,4 | 47,4 | 44,3 | 0,3 |
| 5,16 | 79,6 | 2,0 | 84,4 | 24,5 | 63,8 | 53,2 | 1,4 |
| 4,78 | 78,9 | 3,6 | 84,8 | 25,0 | 55,9 | 58,9 | 3,2 |
| 4,08 | 82,8 | 12,2 | 88,2 | 27,3 | 63,1 | 71,2 | 6,1 |
| 3,88 | 82,8 | 54,3 | 87,7 | 51,6 | 70,5 | 79,6 | 73,0 |
| 3,82 | 86,7 | 37,1 | 96,8 | 28,1 | 67,8 | 87,4 | 54,9 |
| 3,74 | 88,2 | 45,4 | 92,9 | 29,8 | 74,9 | 87,9 | 67,0 |
| 2,53 | 89,6 | 82,3 | 97,4 | 28,5 | 72,1 | 95,5 | 94,6 |
| 1,87 | 87,3 | 83,8 | 97,0 | 47,7 | 73,8 | 96,9 | 97,0 |
| 1,82 | 90,5 | 91,8 | 95,0 | 80,8 | 86,6 | 98,1 | 99,7 |
| 1,78 | 90,5 | 83,0 | 97,3 | 92,7 | 79,5 | 96,7 | 96,9 |
| 1,63 | 99,3 | 99,2 | 99,4 | 97,5 | 99,7 | 99,7 | 100,0 |
| 1,55 | 88,7 | 93,3 | 92,2 | 82,7 | 92,7 | 98,4 | 99,7 |

Les résultats de la lixiviation par HCl ou FeCl3 permettent de conclure qu'un milieu acide oxydant (FeCl₃) donne de meilleurs rendements de lixiviation qu'un milieu acide non oxydant (HCl).

### Exemple 2 : Séparation à l'aide d'un échangeur d'ions de la solution obtenue après lixiviation

Un liquide de lixiviation réel est amené sur un échangeur d'anions (DOWEX SBR). Le tableau 5 indique la composition du liquide de lixiviation.

**Tableau 5 :**

| Composition du liquide de lixiviation pour un échangeur d'ions. | |
|---|---|
| pH | 0,4 |
| Zn (mg/l) | 2574 |
| Ca (mg/l) | 16200 |
| Fe (mg/l) | 15300 |
| Mg (mg/l) | 1486 |
| Al (mg/l) | 415 |
| Pb (mg/l) | 740 |

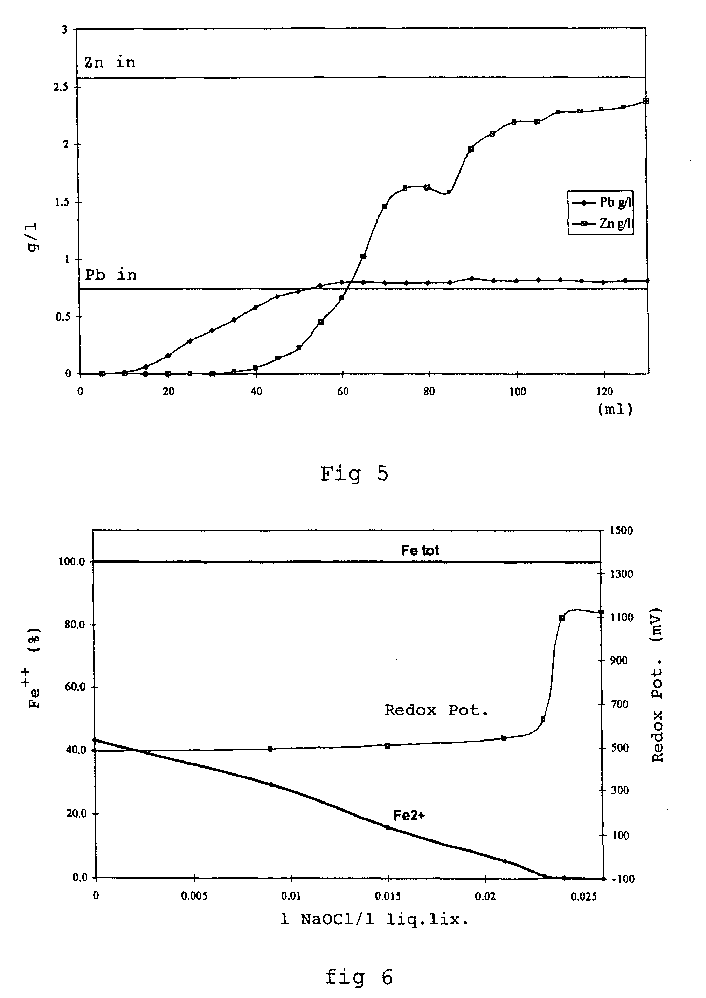

La figure 5 indique la concentration en Zn et Pb dans l'effluent en fonction du volume ayant circulé. Au début, Zn et Pb sont totalement éliminés. Les autres métaux ne sont pas retenus sur la colonne. A mesure que la saturation de la colonne progresse, la concentration en Zn et Pb s'accroît jusqu'à la valeur dans l'influent et il y a lieu de procéder à une régénération. La capacité d'échange dépend fortement de la concentration en Cl⁻ dans le liquide de lixiviation. Une valeur d'environ 1 à 2 mol/l de Cl⁻ est nécessaire pour un bon échange. Si la concentration en Cl⁻ devient trop faible, la capacité diminuera fortement. En accroissant la concentration en Cl⁻, l'affinité pour Fe⁺⁺⁺ s'accroît également, mais à une valeur Cl⁻ 2N, seulement 1% du Fe⁺⁺⁺ présent est échangé.

### Exemple 3 : Influence de la concentration en Cl⁻ sur la capacité de l'échangeur d'ions

La concentration en Cl⁻ est importante pour la quantité de Zn et de Pb qui peut être séparée de la solution sous forme de complexes de chlorure par liaison sur l'échangeur d'ions. La capacité théorique de l'échangeur d'anions DOWEX SBR est 3,5 meq/g de résine sèche. Pour apprécier l'influence de la concentration en Cl⁻, on a mesuré quelle était la rétention de l'échangeur d'ions pour différentes concentrations en Cl⁻. Les résultats sont repris dans le tableau 6.

**Tableau 6 :**

| Influence de la concentration en Cl⁻ sur la capacité de rétention de l'échangeur d'anions. | |
|---|---|
| Concentration en Cl⁻ (N) | Zn (meq/g résine sèche) |
| 2,0 | 3,18 |
| 1,0 | 1,56 |
| 0,3 | 0,44 |

### Exemple 4 : Oxydation d'un liquide de lixiviation par NaOCl

On ajoute progressivement du NaOCl au liquide de lixiviation présentant la composition du tableau 7 (après échange d'ions). Après quelques additions, le potentiel redox est mesuré et on prélève un échantillon. Dans l'échantillon, le rapport Fe⁺⁺/Fe⁺⁺⁺ est mesuré. le résultat est repris dans la figure 6.

Lorsque tout le Fe⁺⁺ est oxydé, on peut observer un bond marqué du potentiel redox (24). Ceci peut être utilisé pour la régulation de la réaction d'oxydation.

**Tableau 7 :**

| Composition du liquide de lixiviation. | |
|---|---|
| pH | 1,17 |
| E (mV) | 480 |
| Mg (mg/l) | 381 |
| Al (mg/l) | 1389 |
| Ca (mg/l) | 1461 |
| Fe²⁺ (mg/l) | 2910 |
| Fe³⁺ (mg/l) | 4561 |
| Mn (mg/l) | 41,5 |
| Zn (mg/l) | 6,3 |
| Pb (mg/l) | 37,2 |
| Cl (mol/l) | 0,72 |

### Exemple 7 : Evolution du potentiel redox et du pH lors de l'oxydation par Ca(ClO)₂

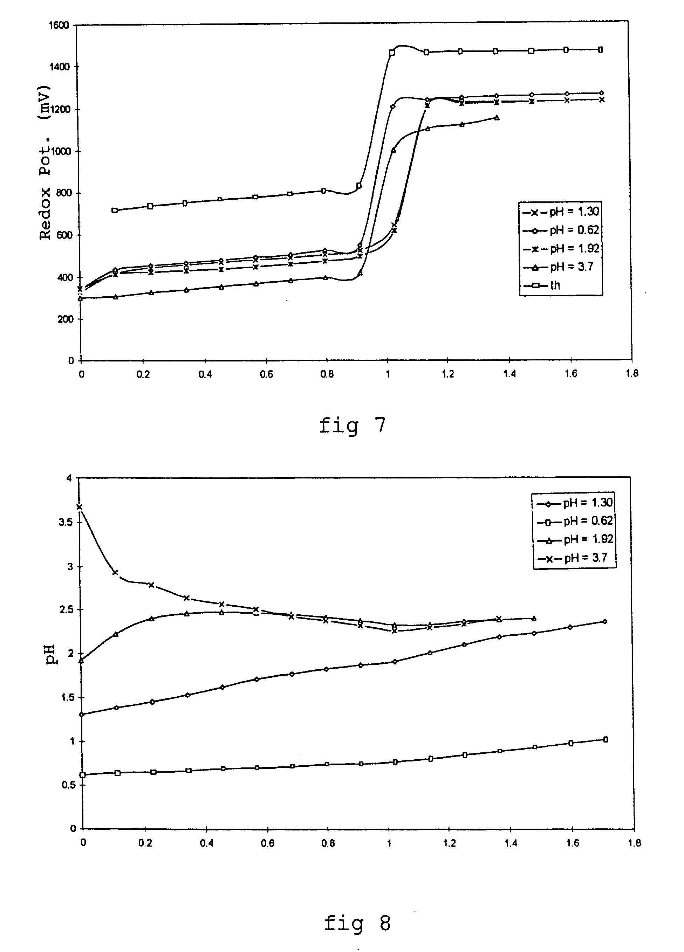

Le potentiel redox et le pH sont mesurés dans une solution de FeSO₄ 150 mmol/l. Cette solution présente un pH de 1,3 et un potentiel redox de -328 mV. On ajoute à la solution H₂SO₄ ou NaOH pour déterminer l'influence du pH de la solution sur le processus d'oxydation. A 50 ml de cette solution, on ajoute toutes les 2 minutes 2 ml d'une solution de Ca(ClO)₂. La concentration de la solution de Ca(ClO)₂ est de 170 mmol/l. Les résultats sont repris dans les figures 7 et 8.

Du fait qu'un liquide de lixiviation oxydé présente un pH et un potentiel redox appropriés, il peut être réutilisé dans l'étape de lixiviation. Il contient alors essentiellement du FeCl₃.

### Exemple 8 : Utilisation du filtre à bande

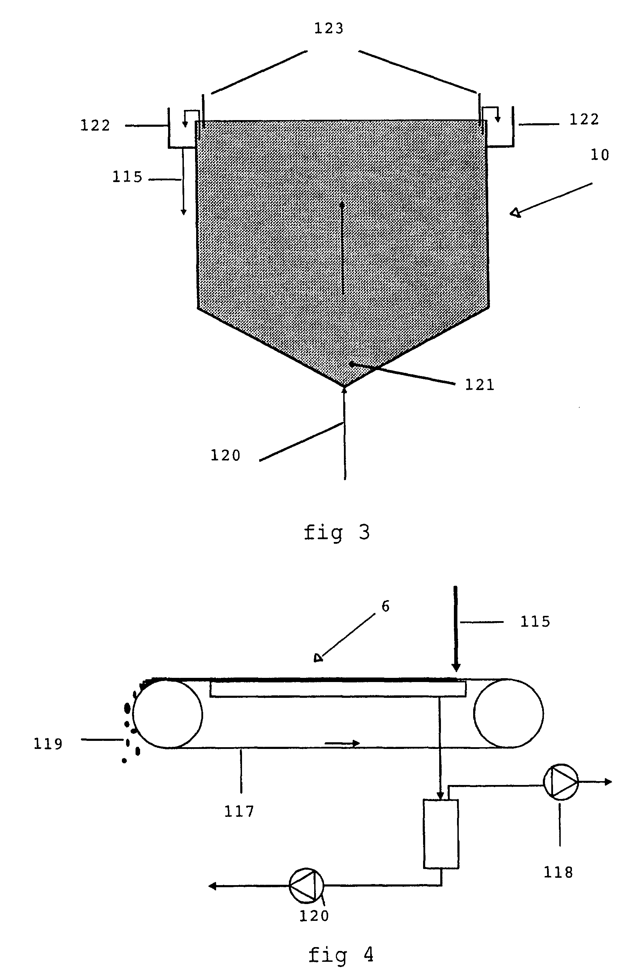

Le filtre à bande (Filtre Philippe) utilisé est celui de la figure 4 qui sera décrit ci-après.

Les paramètres optimaux de la bande filtrante sont repris dans le tableau 8.

**Tableau 8 :**

| Paramètres optimaux de la bande filtrante. | |
|---|---|
| Concentration agent floculant (Zetag 32 (ppm)) | 100-200 |
| Vitesse de la bande filtrante (m/min) | 1,1 |
| Débit traité (l/u) | environ 600 |
| Epaisseur du gâteau de filtration (mm) | environ 5 |
| Gâteau de filtration VSG (%) | 34,4±9,7 |

### Simulation du processus

Lors de la simulation du processus, tous les constituants du processus sont exécutés séquentiellement au labo. En procédant à plusieurs répétitions successives, il est également possible de simuler la réutilisation du recirculat. Une étape du processus est toujours formée par une lixiviation, une filtration sur filtre plié, un échange d'ions et une oxydation par NaOCl. On effectue au total 5 expérimentations dans différentes conditions telles que l'addition de FeCl₃ ou de NaOCl comme agent d'oxydation lors de la réaction.

### L'installation

### Description de l'installation

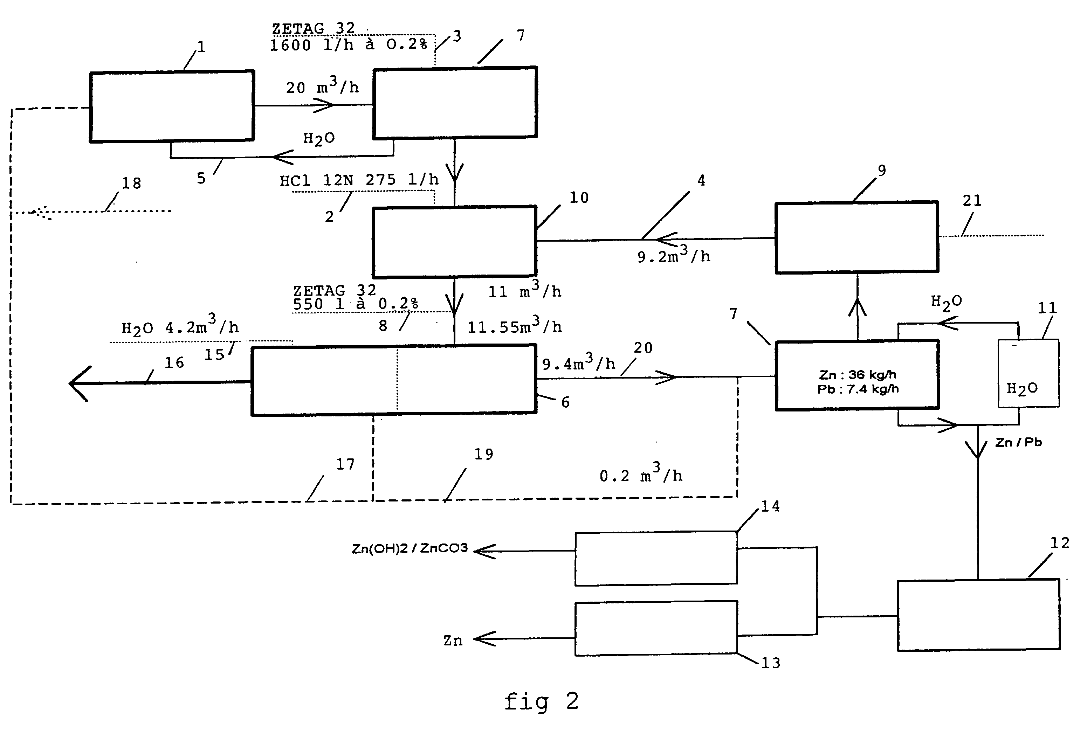

L'installation utilisée est représentée dans la figure 2.

La boue provenant des hauts-fourneaux dans le précipitateur 1 présente une teneur en matière sèche d'environ 5%. Cette boue alimentée à raison de 20 m³/h dans l'épaississeur 7. Le but de cette étape est d'accroître la teneur en matière sèche de la boue jusqu'à environ 40% de préférence. Cette étape n'est pas indispensable pour un bon fonctionnement, mais permet d'économiser de façon marquée les réactifs chimiques, accroît le rendement de recirculation et réduit les frais d'exploitation. Pour obtenir un meilleur rendement, on peut ajouter un agent de floculation tel que Zetag 32 en 3. L'eau séparée peut être réutilisée (15) pour le lavage des gaz (scrubbing) de hauts-fourneaux.

L'épaississeur 7 est constitué de manière qu'une teneur en matière sèche d'environ 30 à 50% puisse être obtenue. Pour réaliser l'épaississement à l'échelle industrielle, on peut utiliser une presse centrifuge comme Alfa Laval DSNX 4850 par exemple.

Pour les exemples, il faut tenir compte du fait que la boue provenant de lagunage ne subit pas d'épaississement comme boue entrante du fait que la teneur en matière solide (environ 15%) est suffisamment élevée. La boue des hauts-fourneaux A et B est épaissie à l'aide d'un épaississeur. A ces boues, on peut encore ajouter une quantité d'eau pour obtenir une boue qui est facile à pomper et qui se mélange encore bien dans le réacteur.

La boue épaissie, en l'occurrence 2,5 tonnes/h de boue humide ou 1,5 tonne/h de boue sèche, est amenée dans le réacteur 10 simultanément avec l'agent de lixiviation 2 (de préférence HCl) et éventuellement le recirculat 4 ainsi qu'un agent d'oxydation. Ceci provoque le passage des métaux contaminants dans la solution sous l'influence de l'acide et de l'oxydant. Le rapport L/S est de 10 et le pH dans le réacteur est inférieur à 2, de manière optimale de l'ordre de 1,5. A ce pH, Zn et Pb passent en solution tandis que Fe n'est que partiellement dissous. Le potentiel redox est de préférence supérieur à 450 mV. Si le temps de séjour dans le réacteur est de l'ordre d'environ 2 heures, une dissolution quantitative du Zn et du Pb se produit.

Après le réacteur 10, la suspension est filtrée à l'aide d'un filtre en 6, éventuellement après addition 8 d'un agent de floculation (par exemple Zetag 32). La toile de filtration peut être lavée par de l'eau 15 ; le résidu est un gâteau de filtration qui contient essentiellement du carbone et du fer et peut être récupéré en l'amenant vers l'installation de frittage 16, l'eau de lavage étant recirculée de 17 vers 1 en subissant une neutralisation 18 par un lait de chaux ou NaOH, une partie 19 peut être ajoutée au filtrat 20.

On envoie vers l'installation de frittage dans les circonstances opératoires 3.1 tonnes de boues traitées à 30% de matières sèches.

Le filtrat 20 est ensuite séparé sur un échangeur d'ions 7 afin d'éliminer le Zn et Pb dissous. Uniquement Zn et Pb subissent l'échange sur l'échangeur d'anions, tandis que les autres métaux (Ca, Al, Mg, Mn et Fe) ne subissent pas d'échange et passent donc simplement dans les colonnes en restant en solution.

Après les échangeurs d'ions, la solution est oxydée dans le réacteur d'oxydation 9 (par exemple à l'aide de NaOCl ou Ca(OCl)₂ alimenté en 21) et le recirculat 4 est réutilisé dans le réacteur de lixiviation 10. Le recirculat 4 contient après l'oxydation essentiellement une solution de FeCl₃ qui provoque dans le réacteur la précipitation de Fe⁺⁺⁺ sous forme de goethite et rend possible la réutilisation de l'acide chlorhydrique libéré par cette réaction comme réactif.

Après saturation de l'échangeur d'ions 7, une régénération à l'aide d'eau provenant d'un réservoir tampon 11 est nécessaire. La régénération est possible avec de l'eau ou avec le régénérat, à savoir avec Zn et Pb en solution.

Le Zn dans le régénérat peur subir une épuration dans l'installation de cémentation 12. Ceci se produit par addition d'une quantité de Zn métallique en poudre qui passera en solution tandis que le Pb présent précipite comme métal. De cette manière, on obtient une solution de Zn qui est suffisamment pure et concentrée pour rendre possible une bonne récupération du métal. Cette récupération peut s'effectuer par exemple par une électrolyse 13 (ce qui permet d'obtenir le métal) ou une réaction de précipitation 14 (ce qui produit de l'hydroxyde de zinc ou du carbonate de zinc).

Un réacteur de lixiviation 10 pouvant convenir est représenté dans la figure 3. Dans la partie inférieure 120 du réacteur, on alimente la boue entrante et l'acide 121 (éventuellement du recirculat). La suspension ayant réagi est évacuée en 115 en provenance du canal de débordement 122. Un anneau-barrière 123 peut être prévu pour empêcher que la mousse formée ne pénètre dans le débordement.

La suspension peut être déplacée par gravité vers un réservoir tampon ou directement vers le filtre à bande 6 de la figure 2.

Dans la figure 4 dont il est fait mention à l'exemple 8, la boue entrante 115 est amenée sur une toile filtrante à brin en boucle 117 et le filtrat est prélevé, par exemple par des pompes à vide 118 et 120 respectivement vers 20 et 17, 19 (voir figure 2), tandis que la matière solide restante 119, après avoir été lavée avec de l'eau, est finalement séparée en la grattant de la toile filtrante 117 à la fin de la bande.

Dans les exemples 9 à 13, on utilise chaque fois un réacteur comme dans la figure 3. Il est possible de travailler avec d'autres types de réacteur.

### Exemple 9 : Lixiviation d'une boue d'un lagunage à l'aide d'HCl et de FeCl₃, sans que le recirculat filtré soit remis en circulation

Cette expérimentation est une succession de 8 essais.

### Exemple 10 : Lixiviation d'une boue d'un lagunage à l'aide d'HCl et de FeCl₃, avec recirculation du recirculat filtré

Le recirculat est oxydé avec NaOCl avant d'être renvoyé au réacteur. Cette expérimentation est une succession de 9 essais.

### Exemple 11 : Lixiviation d'une boue d'un lagunage à l'aide d'HCl et de NaOCl, avec recirculation du recirculat filtré

Cette expérimentation est une succession de 24 essais.

### Exemple 12 : Lixiviation d'une boue d'un haut-fourneau A à l'aide d'HCl et de NaOCl, avec recirculation du recirculat filtré

Cette expérimentation est une succession de 11 essais.

### Exemple 13 : Lixiviation d'une boue d'un haut-fourneau B à l'aide d'HCl et de NaOCl, avec recirculation du recirculat filtré

Cette expérimentation est une succession de 8 essais.

Les rendements de lixiviation et les circonstances opératoires sont chaque fois reprises comme valeurs moyennes obtenues pour un type de boue dans des conditions d'exploitation données telles que définies dans les exemples.

Ainsi, dans l'exemple 9, la valeur est la moyenne de 9 essais. L'écart indiqué es la déviation standard sur la moyenne.

Le tableau 9 est une représentation des rendements de lixiviation moyens pour Zn, Pb et Fe dans les différents essais, indiquant également le pH moyen et le potentiel redox.

**Tableau 9 :**

| représentation des rendements moyens (%) pour Zn, Pb et Fe et du pH et du potentiel redox (mV) de l'échantillon qui a été filtré au laboratoire. | | | | | |
|---|---|---|---|---|---|
| Exemple | 9 | 10 | 11 | 12 | 13 |
| pH labo | 1,35±0,26 | 1,33±0,23 | 1,18±0,36 | 0,59±0,27 | 1,11±0,52 |
| E (mV) | 496±4 | 510±3,5 | 694±79 | 706±141 | 704±57 |
| Zn (%) | 95,4±1,4 | 96,1±2,0 | 96,1±1,3 | 95,9±1,5 | 98,1,2±1,2 |
| Pb (%) | 96,9±1,2 | 97,6±1,3 | 93,8±4,7 | 92,5±5,6 | 96,5±2,9 |
| Fe (%) | 45,6±8,5 | 51±20 | 32±10 | 41±22 | 49±34 |

## Revendications

1. Procédé d'élimination de métaux non ferreux tels que le Zn et le Pb au départ de boues contenant du fer, comprenant les étapes opératoires suivantes :
- une étape non sélective de lixiviation des boues contenant du fer en milieu oxydant acide à un pH inférieur à 2 dans un réacteur afin d'obtenir une suspension lixiviée, ladite étape utilisant un agent lixiviant contenant essentiellement du HCl et/ou du FeCl₃;
- une première étape de séparation au cours de laquelle la suspension lixiviée est séparée en une fraction solide et en une solution;
- une étape d'oxydation dans laquelle la solution subit une oxydation par un agent oxydant, provoquant la conversion du Fe⁺⁺ dans la solution en Fe⁺⁺⁺;
- réutilisation de la solution oxydée dans l'étape de lixiviation, ce qui provoque une précipitation du Fe⁺⁺⁺ dans le réacteur et son élimination de la solution au cours de la première étape de séparation tandis que l'acide lié sous forme de FeCl₃ est récupéré.

2. Procédé selon la revendication 1, **caractérisé en ce qu'**il comporte de plus :
- une deuxième étape de séparation qui comporte une séparation de la solution résultant de la première étape de séparation sur au moins un échangeur d'ions et dans laquelle la concentration en ions Cl⁻ dans la solution étant d'au moins environ 1 M.

3. Procédé selon la revendication 1 ou 2, **caractérisé en ce que** la première étape de séparation s'effectue par filtration.

4. Procédé selon l'une quelconque des revendications précédentes, **caractérisé en ce que** le pH lors de l'étape de lixiviation est inférieur à une valeur de l'ordre de 1,5.

5. Procédé selon l'une quelconque des revendications précédentes, **caractérisé en ce que** le potentiel redox dans l'étape de lixiviation est supérieur à environ 450 mV.

6. Procédé selon l'une quelconque des revendications précédentes, **caractérisé en ce que** l'oxydant est Cl₂.

7. Procédé selon l'une quelconque des revendications précédentes, **caractérisé par** un temps de traitement moyen pour l'étape de lixiviation d'environ 2 heures.

8. Procédé selon l'une quelconque des revendications précédentes, **caractérisé en ce que** la concentration en Cl- dans la solution est de préférence comprise entre 1,5 et 2,5 mol/l.

9. Procédé selon l'une quelconque des revendications précédentes, **caractérisé en ce que** l'échangeur d'ions est régénéré avec de l'eau et/ou une solution aqueuse d'ions métalliques, le régénérat s'écoulant étant recueilli.

10. Procédé selon la revendication 9, **caractérisé en ce que** Pb du régénérat s'écoulant est séparé au moyen d'une cémentation.

11. Procédé selon la revendication 10, **caractérisé en ce que** l'on récupère le Zn du régénérat par électrolyse.

12. Procédé selon la revendication 10, **caractérisé en ce que** Zn(OH)₂ ou ZnCO₃ est récupéré du régénérat à l'aide d'une réaction de précipitation.

## Patentansprüche

1. Verfahren zum Entfernen von nicht eisenhaltigen Metallen, wie Zn und Pb, aus Eisen enthaltenden Schlämmen, das die folgenden Betriebsstufen aufweist:
- eine nicht selektive Auslaugungsstufe der Eisen enthaltenden Schlämme in einem oxidierenden sauren Milieu bei einem pH Wert von weniger als 2 in einem Reaktor, um eine ausgelaugte Suspension zu erzielen, wobei in der besagten Stufe ein Auslaugungsmittel zum Einsatz gebracht wird, das im wesentlichen HCl und/oder FeCl₃ enthält;
- eine erste Trennungsstufe, während welcher die ausgelaugte Suspension in eine feste Fraktion und in eine Lösung getrennt wird;
- ein Oxidationsstufe, während welcher die Lösung eine Oxidation durch ein Oxidationsmittel erfährt, wodurch die Umwandlung des Fe⁺⁺ in der Lösung in Fe⁺⁺⁺ hervorgerufen wird;
- eine Wiederbenutzung der oxidierten Lösung in der Auslaugungsstufe, was die Ausfällung des Fe⁺⁺⁺ in dem Reaktor verursacht, und seine Eliminierung aus der Lösung im Verlaufe der ersten Trennungsstufe, während die unter der Form von FeCl₃ gebundene Säure zurückgewonnen wird.

2. Verfahren gemäss Anspruch 1, **dadurch gekennzeichnet, dass** es außerdem aufweist:
- eine zweite Trennungsstufe, die eine Trennung der Lösung aufweist, welche sich aus der ersten Trennungsstufe auf mindestens einem Ionenaustauscher ergibt und in welcher die Konzentration an C1⁻ Ionen in der Lösung wenigstens ungefähr 1 M beträgt.

3. Verfahren gemäss Anspruch 1 oder 2, **dadurch gekennzeichnet, dass** die erste Trennungsstufe über eine Filtration durchgeführt wird.

4. Verfahren gemäss irgendeinem der vorhergehenden Ansprüche, **dadurch gekennzeichnet, dass** der pH Wert während der Auslaugungsstufe niedriger als ein Wert in der Größenordnung von 1,5 ist.

5. Verfahren gemäss irgendeinem der vorhergehenden Ansprüche, **dadurch gekennzeichnet, dass** das Redoxpotential in der Auslaugungsstufe höher als ungefähr 450 mV liegt.

6. Verfahren gemäss irgendeinem der vorhergehenden Ansprüche, **dadurch gekennzeichnet, dass** das Oxidationsmittel Cl₂ ist.

7. Verfahren gemäss irgendeinem der vorhergehenden Ansprüche, **gekennzeichnet durch** eine durchschnittliche Behandlungszeit von ungefähr 2 Stunden für die Auslaugungsstufe.

8. Verfahren gemäss irgendeinem der vorhergehenden Ansprüche, **dadurch gekennzeichnet, dass** die Konzentration an Cl⁻ in der Lösung vorzugsweise zwischen 1,5 und 2,5 Mol/l liegt.

9. Verfahren gemäss irgendeinem der vorhergehenden Ansprüche, **dadurch gekennzeichnet, dass** der Ionenaustauscher mit Wasser und/oder mit einer wässerigen Lösung von metallischen Ionen regeneriert wird, wobei der abfließende Regenerationsanteil aufgefangen wird.

10. Verfahren gemäss Anspruch 9, **dadurch gekennzeichnet, dass** das Pb des abfließenden Regenerationsanteils mit Hilfe einer Zementierung getrennt wird.

11. Verfahren gemäss Anspruch 10, **dadurch gekennzeichnet, dass** das Zn des Regenerationsanteils durch Elektrolyse zurückgewonnen wird.

12. Verfahren gemäss Anspruch 10, **dadurch gekennzeichnet, dass** Zn(OH)₂ oder ZnCO₃ mit Hilfe einer Ausfällung aus dem Regenerationsanteil zurückgewonnen wird.

## Claims

1. Process for the leaching of non-ferrous metals such as Zn and Pb to separate them from sludges containing iron, comprising the following operation steps:
- a non-selective step of leaching of sludge containing iron in an acidic oxidising medium at a pH lower than 2 in a reactor in order to obtain a leached suspension;
- a first step of separation in which the leached suspension is separated in a solid fraction and a solution;
- an oxidisation step in which the solution undergoes oxidisation by an oxidising agent, causing the conversion of Fe++ present in the solution into Fe+++;
- re-use of the oxidised solution in the leaching step, causing precipitation of the Fe+++ in the reactor and its elimination from the solution in the course of the first step of separation, while the bound acid in the form of FeCl₃ is recovered.

2. Process according to claim 1, **characterised in that** it additionally comprises:
- a second step of separation which includes a separation from the solution resulting from the first step of separation on at least one ion exchanger and in which the concentration in ions Cl⁻ in the solution is at least about 1 M.

3. Process according to claim 1 or 2, **characterised in that** the first step of separation is carried out by filtration.

4. Process according to any of the preceding claims, **characterised in that** the pH at the time of the step of leaching is lower than a value of the order of 1.5.

5. Process according to any of the preceding claims, **characterised in that** the redox potential in the leaching step is higher than about 450 mV.

6. Process according to any of the preceding claims, **characterised in that** the oxidising agent is Cl₂.

7. Process according to any of the preceding claims, **characterised in that** an average treatment time for the step of leaching is of about 2 hours.

8. Process according to any of the preceding claims, **characterised in that** the concentration of Cl⁻ in the solution is preferably comprised between 1.5 and 2.5 mol/l.

9. Process according to any of the preceding claims, **characterised in that** the ion exchanger is regenerated by water and/or an aqueous solution of metallic ions, the outflowing "regenerate" being collected.

10. Process according to claim 10, **characterised in that** the Pb of the outflowing "regenerate" is separated by means of cementation.

11. Process according to claim 10, **characterised in that** the Zn of the regenerate is recovered by electrolysis.

12. Process according to claim 10, wherein Zn(OH)₂ or ZnCO₃ is recovered from the regenerate by means of a precipitation reaction.
